# EUROPÄISCHE PATENTANMELDUNG

(11) **EP 2 660 499 A2**
(43) Veröffentlichungstag der Anmeldung: **06.11.2013**
(21) Anmeldenummer: 13001422.8
(22) Anmeldetag: 20.03.2013
(51) Int. Cl.: F16L 23/08

(54) **Profilschelle**

(30) Priorität: 02.05.2012 DE 102012009256
(71) Anmelder: NORMA Germany GmbH, 63477 Maintal (DE)
(72) Erfinder: Krüger, Manfred, 63654 Büdingen (DE); Mann, Stephan, 63599 Biebergemünd (DE); Kamp, Achim, 63505 Langenselbold (DE)
(74) Vertreter: Knoblauch, Andreas

(57) **Zusammenfassung**

Es wird eine Profilschelle (1) angegeben mit einem Schellenband, das eine Basis (2) und radial einwärts gerichtete Flanken (3, 4) aufweist, und einer Spanneinrichtung (13), die zwei Enden des Schellenbandes miteinander verbindet, wobei das Schellenband in Umfangsrichtung mindestens ein erstes Teil (11) und ein zweites Teil (12) aufweist.

Man möchte die Montage einer Profilschelle auf einfache Weise ermöglichen.

Hierzu ist vorgesehen, dass das erste Teil (11) in mindestens einer seiner Flanken (3, 4) eine erste Verbindungsgeometrie (17) und das zweite Teil (12) in mindestens einer seiner Flanken (3, 4) eine zweite Verbindungsgeometrie (18) aufweist, wobei die erste Verbindungsgeometrie (17) und die zweite Verbindungsgeometrie (18) miteinander in Eingriff bringbar sind.

## Beschreibung

Die Erfindung betrifft eine Profilschelle mit einem Schellenband, das eine Basis und radial einwärts gerichtete Flanken aufweist, und einer Spanneinrichtung, die zwei Enden des Schellenbandes miteinander verbindet, wobei das Schellenband in Umfangsrichtung mindestens ein erstes Teil und ein zweites Teil aufweist.

Eine derartige Profilschelle ist beispielsweise aus DE-198 00 283 Cl bekannt.

Eine derartige Profilschelle dient dazu, zwei Rohre oder Rohrabschnitte zu verbinden. Die beiden Rohrabschnitte weisen an ihren zu verbindenden Enden radial nach außen ragende Flansche auf. Diese Flansche weisen an ihren voneinander abgewandten Rückseiten geneigte Flächen auf, so genannte Konus- oder Kegelflächen. Wenn die Profilschelle gespannt wird, dann wirken die Flanken auf die Konusflächen und drücken dadurch die beiden Rohrabschnitte aufeinander zu. Wenn die Profilschelle fertig gespannt ist, dann liegen die beiden Rohrabschnitte mit einer vorbestimmten Kraft aneinander an. Eine derartige Verbindung wird auch als "Kegelflanschverbindung" bezeichnet.

Zur Montage muss die Profilschelle so weit aufgeweitet werden, dass die Flanken über die Vorsprünge an den Rohrenden geführt werden können. Hierzu kann man beispielsweise das Schellenband aufbiegen, wenn es in Umfangsrichtung zwischen der Spanneinrichtung durchgehend ausgebildet ist.

Eine andere Lösung ist in der eingangs erwähnten DE 198 00 283 C1 vorgeschlagen worden. Hier ist das Schellenband in Umfangsrichtung in zwei Teile unterteilt. Zur Verbindung der beiden Teile sind zwei Spanneinrichtungen vorgesehen, die beispielsweise diametral gegenüberliegend angeordnet sind.

Eine derartige Ausgestaltung hat sich im Grunde bewährt. Allerdings muss man bei der Montage darauf achten, dass beide Spanneinrichtungen betätigt werden, um die Profilschelle richtig zu montieren.

In einer anderen Lösung werden die beiden Teile des Schellenbandes mittels eines Gelenks miteinander verbunden. Bei einem derartigen Gelenk wird ein Haken an einen Teil in eine dafür vorgesehene Aufnahme am anderen Teil eingehängt. Dies erfordert im Regelfall eine Aufweitung am Ende eines Teils. Der Übergangsbereich wird dadurch unterbrochen, und das Schellenband kann die Vorsprünge oder Flansche der Rohre an dieser Stelle nicht optimal abdecken. Geringere Axialkräfte können die Folge sein. Weiterhin besteht die Gefahr, dass im Einsatzfall das Gelenk eine Schwachstelle bildet und bei entsprechender Belastung zum Versagen führen kann.

Der Erfindung liegt die Aufgabe zugrunde, die Montage einer Profilschelle auf einfache Weise zu ermöglichen.

Diese Aufgabe wird bei einer Profilschelle der eingangs genannten Art dadurch gelöst, dass das erste Teil in mindestens einer seiner Flanken eine erste Verbindungsgeometrie und das zweite Teil in mindestens einer seiner Flanken eine zweite Verbindungsgeometrie aufweist, wobei die erste Verbindungsgeometrie und die zweite Verbindungsgeometrie miteinander in Eingriff bringbar sind.

Mit dieser Ausgestaltung ist es auf einfache Weise möglich, die Profilschelle zu montieren.

Vor der Montage sind das erste Teil und das zweite Teil lediglich durch die Spanneinrichtung miteinander verbunden. Im Übrigen gibt es zwischen den beiden Teilen eine Lücke, so dass die beiden Teile beispielsweise gegeneinander verschwenkt werden können, um sie über die Flansche an den Rohrenden hinweg zu führen. Sobald sich die Teile der Profilschelle am Umfang der Flansche befinden, können die erste Verbindungsgeometrie und die zweite Verbindungsgeometrie miteinander in Eingriff gebracht werden. Hierzu sind die erste Verbindungsgeometrie und die zweite Verbindungsgeometrie vorzugsweise aneinander angepasst, d.h. die Flanken des ersten Teils und des zweiten Teils bilden im Bereich der Verbindungsgeometrien eine geschlossene oder nahezu geschlossene Fläche, wenn die Verbindungsgeometrien in Eingriff miteinander stehen. Sobald dieser Eingriff hergestellt worden ist, sind das erste Teil und das zweite Teil ausreichend miteinander verbunden, um bei einem Spannen der Spanneinrichtung die notwendigen Zugkräfte aufnehmen zu können. Sobald die zum Verbinden der beiden Rohre notwendige Spannung der Profilschelle erzeugt worden ist, kann sich der Eingriff der Verbindungsgeometrien nicht mehr lösen, weil eine hierzu erforderliche Bewegung nicht mehr möglich ist. In axialer Richtung (bezogen auf die Rohre) ist eine Bewegung der beiden Verbindungsgeometrien relativ zueinander nicht möglich, weil die beiden Flanken mit den Vorsprüngen an den Rohrenden eine derartige Bewegung verhindern. In eine andere Richtung ist eine Bewegung der beiden Verbindungsgeometrien relativ zueinander ebenfalls nicht mehr möglich, weil die Spanneinrichtung den Durchmesser der Profilschelle in ausreichender Weise vermindert hat.

Vorzugsweise weist das erste Teil in seinen beiden Flanken eine erste Verbindungsgeometrie und das zweite Teil in seinen beiden Flanken eine zweite Verbindungsgeometrie auf. Damit wird eine Verbindung zwischen dem ersten Teil und dem zweiten Teil an beiden Seiten der Vorsprünge der Rohrenden hergestellt, was die übertragbaren Spannkräfte vergrößert. Damit wird die Kegelflanschverbindung in noch besserem Maße stabil.

Hierbei ist bevorzugt, dass die Verbindungsgeometrien in beiden Flanken eines Teils gleich ausgebildet sind. Damit ist für beide Flanken die gleiche Bewegung erforderlich, um die erste Verbindungsgeometrie und die zweite Verbindungsgeometrie miteinander in Eingriff zu bringen. Dies erleichtert die Montage weiter.

Vorzugsweise liegen in einem montierten Zustand die Basis des ersten Teils und die Basis des zweiten Teils aneinander an oder es ist eine Lücke zwischen der Basis des ersten Teils und der Basis des zweiten Teils gebildet, die maximal so groß ist wie eine radiale Dicke der Basis. In diesem Fall sind die Vorsprünge oder Kegelflansche an den Rohrenden praktisch über den gesamten Umfang abgedeckt, möglicherweise mit Ausnahme eines Bereichs der Spanneinrichtung. Damit kann man sicherstellen, dass auch im Hinblick auf eine thermische Beaufschlagung der Profilschelle, wie sie beispielsweise bei der Verwendung der Profilschelle an einem Auspuffstrang eines Kraftfahrzeugs mit Verbrennungsmotor auftreten kann, keine Probleme entstehen. Ein kleiner Spalt zwischen der Basis des ersten Teils und der Basis des zweiten Teils schadet nichts.

Vorzugsweise sind die Verbindungsgeometrien ausschließlich in den Flanken angeordnet. Die Basis bleibt damit durchgehend erhalten, wenn man von dem Spalt an der Stoßstelle zwischen dem ersten Teil und dem zweiten Teil bei montierter Profilschelle absieht. Dies erhöht die möglichen Spannkräfte weiter und damit auch die Stabilität der Kegelflanschverbindung.

Vorzugsweise weist die erste Verbindungsgeometrie eine sich radial nach außen öffnende Ausnehmung auf, mit der die zweite Verbindungsgeometrie in Eingriff bringbar ist. Die zweite Verbindungsgeometrie muss also nur von radial außen in die erste Verbindungsgeometrie eingesetzt werden, um einen Eingriff herzustellen. Dies ist eine relativ einfache Maßnahme, die ein Monteur ohne weiteres bewerkstelligen kann.

Hierbei ist bevorzugt, dass sich in Umfangsrichtung an die sich radial nach außen öffnende Ausnehmung ein radial nach außen gerichteter Vorsprung anschließt. Dieser Vorsprung kann dann in eine entsprechende Ausnehmung in der zweiten Verbindungsgeometrie eintreten, so dass man einen Formschluss zwischen den Flanken vom ersten Teil und zweiten Teil erzeugen kann.

Alternativ oder zusätzlich kann vorgesehen sein, dass die zweite Verbindungsgeometrie eine sich radial nach innen öffnende Ausnehmung aufweist, mit der die erste Verbindungsgeometrie in Eingriff bringbar ist. In diesem Fall gilt das Gleiche wie zu den zuvor geschilderten Ausführungsformen mit dem Unterschied, dass die Bewegung in die entgegengesetzte Richtung hin verlaufen muss, um die beiden Verbindungsgeometrien miteinander in Eingriff zu bringen. Die zweite Verbindungsgeometrie wird dann einfach von radial außen in die erste Verbindungsgeometrie eingehakt.

Vorzugsweise schließt sich in Umfangsrichtung an die sich radial nach innen öffnende Ausnehmung ein radial nach innen gerichteter Vorsprung an. Dieser Vorsprung kann dann in eine entsprechende Ausnehmung an der ersten Verbindungsgeometrie eintreten.

Vorzugsweise weist Spanneinrichtung in radialer Richtung ein Spiel auf, das mindestens so groß ist wie eine radiale Bewegung zum Herstellen des Eingriffs zwischen den beiden Verbindungsgeometrien. Wenn die beiden Verbindungsgeometrien miteinander in Eingriff gebracht werden sollen, werden sie radial zueinander bewegt. Diese radiale Bewegung ist möglich, weil die Spanneinrichtung vor dem endgültigen Festspannen der Profilschelle diese Bewegung noch erlaubt.

Vorzugsweise weist die Spanneinrichtung an jedem Ende des Schellenbandes eine Lasche auf, wobei ein Spannelement durch beide Laschen geführt ist und eine Druckfeder zwischen den Laschen angeordnet ist. Die Druckfeder hält dann die beiden Laschen und damit das erste Teil und das zweite Teil des Schellenbandes mit einem gewissen Abstand zueinander, so dass es für den Monteur leichter ist, die Profilschelle in ungespanntem Zustand über die Vorsprünge oder Kegelflansche an den Rohrenden zu führen. Die Druckfeder kann beim Spannen allerdings komprimiert werden, so dass sie das Spannen nicht behindert.

Hierbei ist bevorzugt, dass die Druckfeder mit Ausrichtgeometrien an den Laschen zusammenwirkt. Hierzu kann die Druckfeder beispielsweise einen polygonartigen Querschnitt, zumindest an ihren Enden, aufweisen, der in entsprechend polygonartige Ausnehmungen an den Laschen eintritt. Beispielsweise kann jede Lasche eine quadratische oder rechteckige Vertiefung aufweisen. Durch diese Ausrichtgeometrien wird sichergestellt, dass auch im unmontierten Zustand das erste Teil und das zweite Teil eine vorbestimmte Ausrichtung zueinander aufweisen. Dies erleichtert die Montage.

Die Erfindung wird im Folgenden anhand eines bevorzugten Ausführungsbeispiels in Verbindung mit der Zeichnung beschrieben. Hierin zeigen:
- Fig. 1: eine Profilschelle in unmontiertem Zustand
- Fig. 2: eine Profilschelle in montiertem Zustand und
- Fig. 3: einen Schnitt III-III nach Fig. 2.

Eine Profilschelle 1 weist ein Schellenband mit einer Basis 2 und zwei radial einwärts gerichteten Flanken 3, 4 auf. Die Flanken sind entgegengesetzt und voneinander weg geneigt, so dass sie im vorliegenden Fall etwa die Form eines Trapezes bilden. Eine derartige Profilschelle 1 wird beispielsweise verwendet, um eine so genannte Kegelflanschverbindung zu bilden.

Bei einer Kegelflanschverbindung haben zwei miteinander zu verbindende Rohre 5, 6 jeweils einen radial nach außen gerichteten Vorsprung 7, 8. Die Vorsprünge 7, 8 haben auf ihren voneinander weg weisenden Rückseiten eine kegelförmig geneigte Anlagefläche 9, 10, an der die beiden Flanken 3, 4 der Profilschelle 1 zu liegen kommen. Wenn die Profilschelle 1 gespannt wird, dann vermindert das Schellenband seinen Durchmesser, so dass sich die Basis den Vorsprüngen 7, 8 zunehmend annähert. Bei dieser Bewegung verstärken die Flanken 3, 4 ihren Druck auf die Anlageflächen 9, 10, so dass die Vorsprünge 7, 8 mit einer vorbestimmten Spannkraft gegeneinander gehalten werden.

In einer anderen Ausbildung sind die Vorsprünge 7, 8 massiv ausgebildet und sind an ihren einander zugewandten Stirnseiten senkrecht zu einer Achse der Rohre 5, 6 ausgerichtet. Die Wirkung der Profilschelle 1 ist hier entsprechend.

Vor der Montage muss man die Profilschelle 1 so weit öffnen können, dass die Flanken 3, 4 über die Vorsprünge 7, 8 hinweggeführt werden können.

Um dies auf einfache Weise zu bewerkstelligen, weist die Profilschelle 1 ein erstes Teil 11 und ein zweites Teil 12 auf. Das erste Teil 11 und das zweite Teil 12 sind durch eine Spanneinrichtung 13 miteinander verbunden. Im vorliegenden Fall weist die Spanneinrichtung eine Schraube 14 auf, die durch eine erste Lasche 15 am ersten Teil und eine zweite Lasche 16 am zweiten Teil geführt ist. Die Schraube 14 steht mit einem Innengewinde in der zweiten Lasche 15 in Verbindung. Es kann aber auch eine zusätzliche Mutter vorgesehen sein, die von außen an der Lasche 15 des ersten Teils 11 anliegt.

Das erste Teil 11 weist eine erste Verbindungsgeometrie 17 auf, die etwa diametral gegenüberliegend der Spanneinrichtung 13 angeordnet ist. Das zweite Teil 12 weist eine zweite Verbindungsgeometrie 18 auf, die ebenfalls etwa diametral der Spanneinrichtung 13 gegenüberliegend angeordnet ist.

Die erste Verbindungsgeometrie 17 ist ausschließlich in den beiden Flanken 3, 4 des ersten Teils 11 angeordnet, also nicht in der Basis 2 des ersten Teils 11. Die Basis 2 des ersten Teils 11 bleibt damit durchgehend erhalten.

Die zweite Verbindungsgeometrie 18 ist ebenfalls nur in den Flanken 3, 4 des zweiten Teils 12 angeordnet. Die Basis 2 des zweiten Teils 12 bleibt also ebenfalls unverändert erhalten.

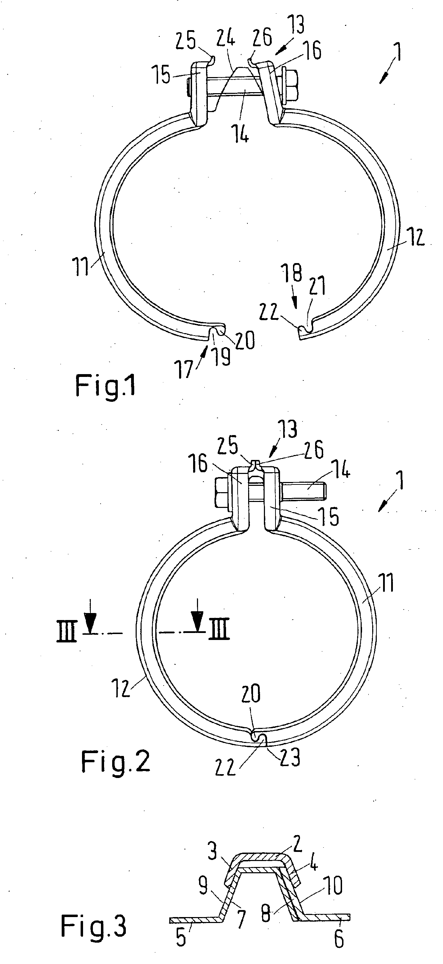

Sowohl beim ersten Teil 11 als auch beim zweiten Teil 12 sind die Verbindungsgeometrien 17, 18 in beiden Flanken 3, 4 identisch ausgebildet, so dass man in der Darstellung der Fig. 1 lediglich die Verbindungsgeometrien 17, 18 in der Flanke 3 erkennen kann. In Fig. 2 erkennt man die gleichen Verbindungsgeometrien 17, 18 in der anderen Flanke 4.

Die erste Verbindungsgeometrie 17 weist eine sich radial nach außen öffnende Ausnehmung 19 auf, an die sich in Umfangsrichtung ein radial nach außen gerichteter Vorsprung 20 anschließt. Die Übergänge zwischen der Flanke 3, der Ausnehmung 19 und dem Vorsprung 20 sind gerundet ausgeführt, d.h. man vermeidet scharfe Kanten.

Die zweite Verbindungsgeometrie 18 weist eine sich radial nach innen öffnende Ausnehmung 21 auf, an die sich in Umfangsrichtung ein radial nach innen gerichteter Vorsprung 22 anschließt.

Die beiden Verbindungsgeometrien 17, 18 sind an einander angepasst, d.h. der Vorsprung 20 am ersten Teil 11 passt genau in die Ausnehmung 21 am zweiten Teil 12, und der Vorsprung 22 am zweiten Teil 12 passt genau in die Ausnehmung 19 am ersten Teil 11.

Wenn die beiden Teile 11, 12 um die Rohre 5, 6 herumgelegt worden sind, kann man durch eine relativ einfache Bewegung einen Eingriff zwischen den beiden Verbindungsgeometrien 17, 18 herstellen. Diese Bewegung beschränkt sich darauf, den Vorsprung 22 am zweiten Teil 12 in Umfangsrichtung über die Ausnehmung 19 am ersten Teil 11 zu bewegen und dann das zweite Teil 12 gegenüber dem ersten Teil 11 radial so zu verlagern, dass der Vorsprung 22 in die Ausnehmung 19 eintreten kann. Bei dieser Bewegung tritt dann gleichzeitig der Vorsprung 20 in die Ausnehmung 21 ein.

Eine derartige radiale Bewegung zwischen den beiden Teilen 11, 12 der Profilschelle 1 ist möglich, weil die Spanneinrichtung 13 diese Bewegung zulässt. Hierzu ist es lediglich erforderlich, dass beispielsweise die Lasche 16 am zweiten Teil ein Langloch für die Schraube 14 aufweist.

Sobald die beiden Verbindungsgeometrien 17, 18 miteinander in Eingriff gebracht worden sind, ergibt sich eine Situation, wie sie in Fig. 2 für eine fertig montierte Profilschelle 1 dargestellt ist. Es ist ohne weiteres zu erkennen, dass der Vorsprung 22 in die Ausnehmung 19 und der Vorsprung 20 in die Ausnehmung 21 eingetreten ist.

Sobald der Eingriff hergestellt worden ist und die beiden Flanken 3, 4 an den Anlageflächen 9, 10 der Vorsprünge 7, 8 zur Anlage gekommen sind, kann der Eingriff zwischen den beiden Verbindungsgeometrien 17, 18 praktisch nicht mehr ohne weiteres aufgelöst werden. Eine Bewegung der beiden Teile 11, 12 relativ zueinander in Axialrichtung der Rohre 5, 6 ist nicht möglich, weil eine derartige Bewegung durch die Vorsprünge 7, 8 verhindert wird. Dementsprechend können die beiden Verbindungsgeometrie 17, 18 in den Flanken 3, 4 der beiden Teile 11, 12 in Axialrichtung nicht außer Eingriff gebracht werden.

Sobald die Profilschelle 1 gespannt ist, ist auch keine Bewegung der beiden Teile 11, 12 in radialer Richtung mehr möglich, so dass auf diese Weise der Eingriff der beiden Verbindungsgeometrien 17, 18 ebenfalls nicht mehr aufgelöst werden kann.

In Umfangsrichtung kann der Eingriff ohnehin nicht aufgelöst werden. Hier ist der Eingriff so ausgebildet, dass er die beim Spannen auftretenden Kräfte zwischen den beiden Teilen 11, 12 ohne weiteres aufnehmen kann.

Im montierten Zustand ergibt sich zwischen den beiden Teilen 11, 12 der Profilschelle eine Stoßstelle 23, an der die Basis 2 des Teils 11 sehr dicht an der Basis 2 des Teils 12 angeordnet ist. Im Idealfall ergibt sich hier eine leichte Berührung. Es ist aber auch ein kleiner Spalt zulässig, der günstigerweise in Umfangsrichtung nicht größer sein sollte als die Dicke der Basis 2 in radialer Richtung. Dementsprechend gibt es praktisch keinen Bereich, an dem die Vorsprünge 7, 8 in Umfangsrichtung nicht durch die Basis 2 abgedeckt sind, wenn man unter Umständen von dem Bereich der Spanneinrichtung 13 absieht. Dementsprechend kann beispielsweise eine Wärmeabstrahlung in Umfangsrichtung sehr gleichmäßig gehalten werden.

Zwischen den beiden Laschen 15, 16 ist eine Druckfeder 24 angeordnet. Solange die beiden Verbindungsgeometrien 17, 18 nicht miteinander in Eingriff gebracht worden sind, kann die Druckfeder 24 die beiden Teile 11, 12 in einem gewissen Abstand voneinander halten.

Die Druckfeder 24 wirkt mit Ausrichtgeometrien an den Laschen 15, 16 zusammen, so dass die beiden Teile 11, 12 in einer vorbestimmten Ausrichtung relativ zueinander gehalten werden. Diese Ausrichtung kann natürlich aufgelöst werden, wenn äußere Kräfte angreifen.

Die Ausrichtgeometrien können in einfacher Weise beispielsweise dadurch hergestellt werden, dass die Druckfeder 24 an ihren Enden eine bestimmte Geometrie aufwiest, beispielsweise ein Polygon, insbesondere ein Rechteck, und die Laschen 15, 16 an ihren einander zugewandten Enden eine entsprechend ausgeformte Geometrie, beispielsweise polygonartige Ausnehmung aufweisen, in die die Druckfeder 24 eintritt. Andere Möglichkeiten zur Ausrichtung der beiden Teile 11, 12 der Profilschelle sind natürlich möglich.

Die beiden Laschen 15, 16 weisen an ihren radial äußeren Enden noch Anschläge 25, 26 auf, die im gespannten Zustand der Profilschelle 1 aneinander zur Anlage kommen und anzeigen, dass ein gespannter Zustand erreicht ist.

## Patentansprüche

1. Profilschelle (1) mit einem Schellenband, das eine Basis (2) und radial einwärts gerichtete Flanken (3, 4) aufweist, und einer Spanneinrichtung (13), die zwei Enden des Schellenbandes miteinander verbindet, wobei das Schellenband in Umfangsrichtung mindestens ein erstes Teil (11) und ein zweites Teil (12) aufweist, **dadurch gekennzeichnet, dass** das erste Teil (11) in mindestens einer seiner Flanken (3, 4) eine erste Verbindungsgeometrie (17) und das zweite Teil (12) in mindestens einer seiner Flanken (3, 4) eine zweite Verbindungsgeometrie (18) aufweist, wobei die erste Verbindungsgeometrie (17) und die zweite Verbindungsgeometrie (18) miteinander in Eingriff bringbar sind.

2. Profilschelle nach Anspruch 1, **dadurch gekennzeichnet, dass** das erste Teil (11) in seinen beiden Flanken (3, 4) eine erste Verbindungsgeometrie (17) und das zweite Teil (12) in seinen beiden Flanken (3, 4) eine zweite Verbindungsgeometrie (18) aufweist.

3. Profilschelle nach Anspruch 2, **dadurch gekennzeichnet, dass** die Verbindungsgeometrien (17, 18) in beiden Flanken (3, 4) eines Teils (11, 12) gleich ausgebildet sind.

4. Profilschelle einem der Ansprüche 1 bis 3, **dadurch gekennzeichnet, dass** in einem montiertem Zustand die Basis (2) des ersten Teils (11) und die Basis (2) des zweiten Teils (12) aneinander anliegen oder eine Lücke zwischen der Basis (2) des ersten Teils (11) und der Basis (2) des zweiten Teils (12) gebildet ist, die maximal so groß ist wie eine radiale Dicke der Basis.

5. Profilschelle nach einem der Ansprüche 1 bis 4, **dadurch gekennzeichnet, dass** die Verbindungsgeometrien (17, 19) ausschließlich in den Flanken (3, 4) angeordnet sind.

6. Profilschelle nach einem der Ansprüche 1 bis 5, **dadurch gekennzeichnet, dass** die erste Verbindungsgeometrie (17) eine sich radial nach außen öffnende Ausnehmung (19) aufweist, mit der die zweite Verbindungsgeometrie (18) in Eingriff bringbar ist.

7. Profilschelle nach Anspruch 6, **dadurch gekennzeichnet, dass** sich in Umfangsrichtung an die sich radial nach außen öffnende Ausnehmung (19) ein radial nach außen gerichteter Vorsprung (20) anschließt.

8. Profilschelle nach einem der Ansprüche 1 bis 7, **dadurch gekennzeichnet, dass** die zweite Verbindungsgeometrie (18) eine sich radial nach innen öffnende Ausnehmung (21) aufweist, mit der die erste Verbindungsgeometrie (17) in Eingriff bringbar ist.

9. Profilschelle nach Anspruch 8, **dadurch gekennzeichnet, dass** sich in Umfangsrichtung an die sich radial nach innen öffnende Ausnehmung (21) ein radial nach innen gerichteter Vorsprung (22) anschließt.

10. Profilschelle nach einem der Ansprüche 1 bis 9, **dadurch gekennzeichnet, dass** die Spanneinrichtung (13) in radialer Richtung ein Spiel aufweist, das mindestens so groß ist, wie eine radiale Bewegung zum Herstellen des Eingriffs zwischen den beiden Verbindungsgeometrien (17, 19).

11. Profilschelle nach einem der Ansprüche 1 bis 10, **dadurch gekennzeichnet, dass** die Spanneinrichtung (13) an jedem Ende des Schellenbandes eine Lasche (15, 16) aufweist, wobei ein Spannelement (14) durch beide Laschen geführt ist und eine Druckfeder zwischen den Laschen (15, 16) angeordnet ist.

12. Profilschelle nach Anspruch 11, **dadurch gekennzeichnet, dass** die Druckfeder (24) mit Ausrichtgeometrien an den Laschen (15, 16) zusammenwirkt.
